# EUROPEAN PATENT SPECIFICATION

(11) **EP 1 110 762 B1**
(45) Date of publication and mention of the grant of the patent: **19.10.2005**
(21) Application number: 00311210.9
(22) Date of filing: 14.12.2000
(51) Int. Cl.: B60C 15/024, B60C 13/00

(54) **A pneumaic tyre**
Luftreifen
Pneumatique

(30) Priority: 15.12.1999 JP 35647299
(43) Date of publication of application: 27.06.2001
(73) Proprietor: SUMITOMO RUBBER INDUSTRIES LIMITED, Kobe-shi, Hyogo-ken (JP)
(72) Inventor: Ueyoko, Kiyoshi, Sumitomo Rubber Industries Ltd., Kobe-shi, Hyogo-ken (JP)
(74) Representative: Manitz, Finsterwald & Partner GbR

(56) References cited:
- EP-A- 0 853 008
- US-A- 4 947 913

## Description

### BACKGROUND OF THE INVENTION

### Field of the Invention

The present invention relates to a pneumatic tyre, improved in durability and light in weight.

### Description of the Prior Art

The applicant of this invention has proposed a tyre improved in bead durability and in lightening of weight in Japanese Patent Application Laid open No.10-193924 (Patent No. 2837840). Fig. 5 is a schematic cross sectional view of a tyre for heavy load in the prior art, showing the outer contour from a side wall portion (a) to a bead portion (b). The contour of the conventional tyre in this region had been formed as an arc (c), connecting a tyre cross section maximum width point p1 and a flange leaving point p2, as shown by a dotted line in the figure. On the other hand, the tyre proposed in the Japanese Patent Application comprised a recessed portion (d) recessing inwards from the normal arc (c) with respect to the tyre axis direction. The recessing portion is disposed adjacent to the flange leaving point p2.
In the tyre proposed by us, the volume of the rubber sidewall is reduced by the recessing portion (d) so that deformation can take place in a large volume of the tyre. Thus, the shear strain can be dispersed in a large volume of the tyre, and the resultant heat generation due to the deformation is made small. As a synergy of these effects, the bead durability is remarkably improved.
The above tyre as well as a conventional tyre have the same contour (c) at the outer end of the carcass folded portion (e). As a result, it can be that the thickness (t) of the rubber is too thin, because of the uncontrollable change of the side wall rubber thickness due to the tolerance in the fabrication process or the tolerance of the height of the carcass folded portion (e). When the rubber thickness (t) is too thin, a so-called rubber destruction can occur due to the shear stress at the outer end of the carcass folded portion (e). This is caused by the deformation of the side wall (a) due to inflation and repeated deformation when the tyre rolls under a load, and so such a structure of tyre can lead to serious tyre damage.
Therefore, a minimum necessary thickness (t) of the rubber must be secured to avoid such tyre damage. This forced the use of a side wall rubber material, which is thick as a whole. However, if such a thick rubber material is used in the tyre in the former Japanese Patent application, the aforementioned advantages of such tyre, i.e., the lightening of the bead portion and the improvement of the durability, can not be attained.
By the way, when the thickness (t) of the rubber material is increased locally, the carcass body will be pressed inwardly by the rubber and thus extend along a path deviated inwardly from the optimum path line of the carcass. In such a case, the bead durability will be remarkably deteriorated, contrary to the intention.
From EP-A-0 853 008 a tyre is known according to the precharacterizing portion of claim 1. In this known tyre the lightening of weight and the improving of durability is not yet optimal.
US-A-4,947,913 discloses a tyre having projections but no recesses. Therefore, also this tyre is not light enough.

### SUMMARY OF THE INVENTION

An object of the present invention is to provide a pneumatic tyre having a minimum necessary thickness (t) of rubber restricting the increase of the rubber volume to be small, giving the advantages of the lightening of weight and the improving of durability can be more effectively attained.
This object is achieved by a pneumatic tyre comprising a carcass having a carcass reinforcement ply extending from a tread portion to a bead core through a side wall portion, and a folded portion folded at the bead core, which is continuously formed with the carcass reinforcement ply, wherein in a standard state that the tyre is installed on a normal rim and the inner pressure of the tyre is normal, the contour of the tyre outer surface in the meridian cross section between a tyre cross section maximum width point P1, which is the most outer point of the tyre surface in the tyre axis direction, and a flange separating point P3 to leave from a flange of the rim, wherein the contour includes a projecting portion projecting outside in the direction of the tyre axis direction with respect to a norm arc, which is an arc having its centre on a line passing through the tyre cross section width maximum point P1, the norm arc passes through the point P1 and tangentially contacts with the flange, and a recessing portion recessing in the tyre axis direction towards the inside with respect to the norm arc, the recessing portion extending towards the inner side in the radial direction;
the height of a maximum projecting point with respect to a bead base line is 0.85 to 1.15 times the height of the outer end of the folded portion, where the maximum projecting point is a point on the projecting portion and is separating at most from the norm arc in the tyre axis direction;
the height of a maximum recessing point with respect to a bead base line is smaller than the height, and is 0.30 to 0.90 times the height, where the maximum recessing point is a point on the recessing portion and is separating at most from the norm arc in the tyre direction; and
the maximum boss distance from the norm arc to the maximum projecting point and the maximum recess distance from the norm arc to the maximum recessing point are respectively 0.001 to 0.040 times the tyre cross section width, characterised in that the projecting portion has a substantially triangular shape, the recessing portion extends continuously with the projecting portion and the tyre is formed so that the outer contour between the maximum projecting point and the maximum recessing point is a straight line having an inclination parallel to that of the folded portion, in the state that the tyre is installed on a normal rim and the inner pressure of the tyre is 50 kPa.
Wherein, said normal rim is the "standard rim" specified in JATMA, the "Measuring Rim" in ETRTO, the "Design Rim" in T&RA or the like., and said normal inner pressure is the "maximum air pressure" in JATMA, the "Inflation Pressure" in ETRTO, the maximum pressure given in the "Tyre Load Limits at Various Cold Inflation Pressures" table in T&RA or the like.

### BRIEF DESCRIPTION OF THE DRAWINGS

Fig. 1 is a cross sectional view of a tyre according to an embodiment of the present invention;
Fig. 2 is a detailed cross sectional view of the bead portion;
Fig. 3 is a diagram for explaining the contour of the tyre;
Fig. 4 is a diagram showing the detailed projecting portion and the recessing portion; and
Fig. 5 is a diagram showing the contour of the bead portion of the prior art tyre.

### DETAILED DESCRIPTION OF THE INVENTION

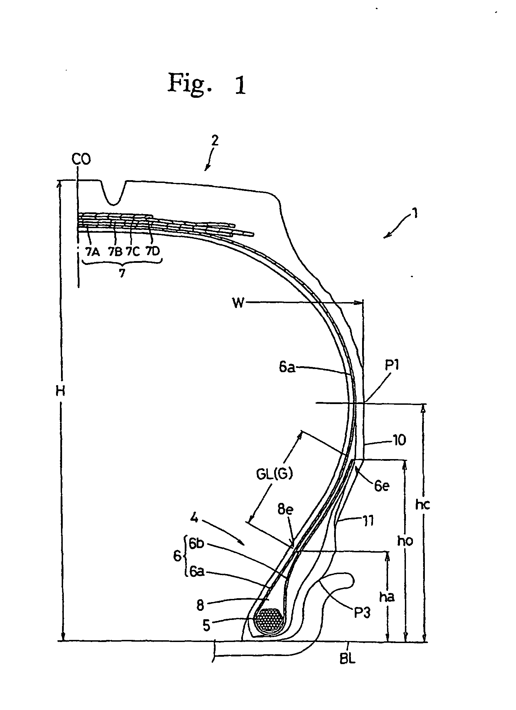

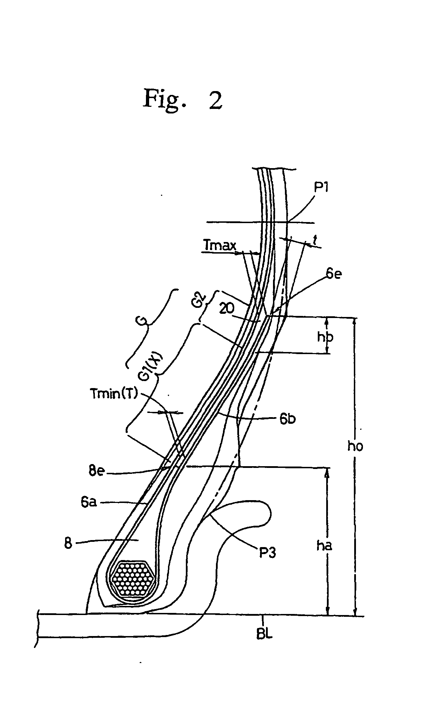

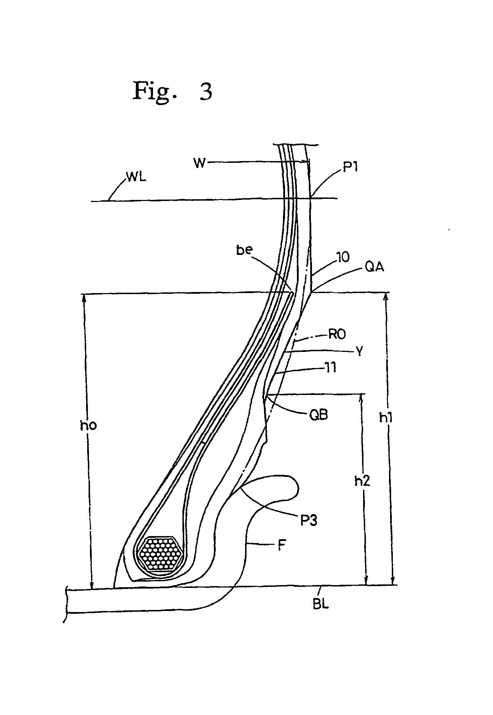

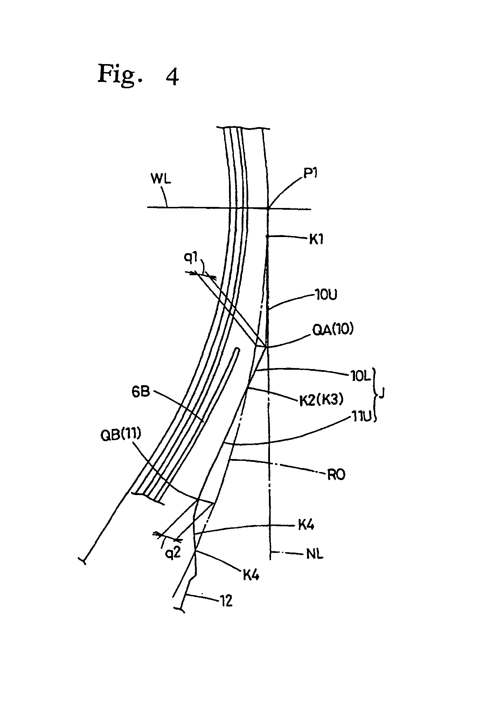

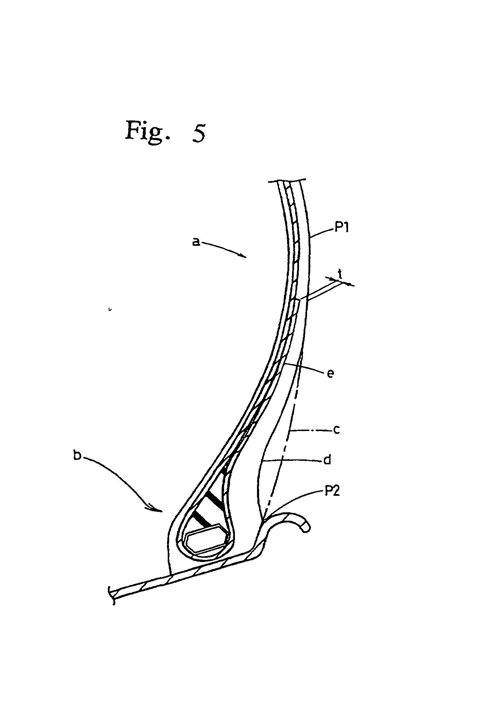

An embodiment of the present invention is explained below, referring to Figs. 1 to 5.
Fig. 1 shows a meridian cross sectional view of a pneumatic tyre 1 according to the present invention, which is a heavy duty tyre for use on a truck or bus, and is fitted to a regular rim and is at the standard state with regular inner pressure.
The tyre 1 comprises a tread portion 2, a pair of side wall portions 3 starting from the both sides of the tread portion 2 and extending inwardly in the tyre radial direction, and a bead portion 4 located at the inner end of each of the side walls 3. The bead portions 4, 4 are bridged by a carcass 6.
The carcass 6 is comprised of one, or more than one carcass ply(s), 6A formed of carcass cord which are organic fibre cord, such as, nylon, rayon, polyester, aromatic polyamide or steel cord, and are arranged at an angle of 70 to 90° with respect to the tyre equator CO. This example shows a carcass made of a sheet of carcass ply whose steel cords are at a 90° angle to the tyre equator CO.
The carcass 6 comprises a carcass body 6a which extends from the tread portion 2 to the bead core 5 in the bead portion via the side wall portion 3, and a folded portion 6b which is a portion folded around the bead core 5 from the inner side to the outer side. The carcass body 6a and the folded portion 6b are fabricated as a single body. Belt layers 7 are disposed in the region inside of the tread portion 2 outside of the carcass body 6a.
The belt layers 7 are comprised of two or more than two belt plies. In this example, the belt layers 7 are comprised of 4 layers, namely, an inner most belt ply 7A arranged at an angle of 50 ± 15° with respect to the tyre equator and outer belt plies 7B, 7C, 7D each arranged at an angle smaller than 30° with respect to the tyre equator. The belt plies are configured one over another so that at least one crossing over point appears, where a belt cord in a ply crosses over a belt cord in another ply. The belt cord in this example is made of steel cord. However, organic fibres, such as, nylon, polyester, rayon, or aromatic polyamide can be used as belt ply material, according to the necessity.
A rubber bead apex 8 is disposed in the bead portion 4 between the carcass body 6a and the folded portion 6b. The bead apex 8 extends outwardly from the bead core 5 in the tyre radial direction, and is tapered to become thinner. The bead apex 8 is made from rubber which has a durometer hardness of 60 to 99°. The bead apex gum is formed so that the inner contour is a substantially straight line parallel to the carcass body 6a, and the outer contour is a concave arc line.
The height (ha) of the outer end 8e of the bead apex 8 from the bead base line BL is 6 to 31 % of the height (H) of the tyre cross section (shown in Fig.1), preferably 8 to 22 %. Because the bead apex 8 is miniaturised in this way, the compressive distortion in the folded portion is reduced. As a result, the durability of the folded portion is improved and the generation of heat at the bead is suppressed. By the way, the term "bead base line BL" is, as regulated in JATMA, TRA and ETRTO, a line parallel to the tyre axis line passing through the rim radius.
The folded portion 6b of the carcass 6 extends in the radial direction beyond the bead apex 8 to form an adjacent region G, where the folded portion is disposed adjacent to the carcass body 6a. The outer end 6e of the folded portion 6b is positioned at a point radially inwards of the tyre cross section maximum width point P1 where the side wall 3 has the most outer position in the tyre axis direction. Namely, the height (ho) of the outer end 6e from the bead base line BL is smaller than the height (hc) of the tyre cross section maximum width point P1.
In the adjacent region G, as shown in Fig. 2, there is a minimum adjacent portion X near to the outer end 8e of the bead apex 8, where the cord distance T between the folded portion 6b and the carcass body 6a has a minimum value Tmin. The minimum value Tmin is 0.15 to 5.0 times the diameter of the carcass cord. If the value is smaller than 0.15 times, the strength of the rubber tends to be insufficient to withstand deformation in the region near to the outer end 8e. On the other hand, if the value is larger than 5.0 times, the heat generation is large, and a so-called tyre separation phenomenon tends to take place starting from this outer end 8e. Thus, preferably, the minimum value Tmin shall be 0.5 to 3.5 times the diameter of the carcass cord, more preferably, it is 0.8 to 2.5 turns the diameter.
Although the minimum adjacent portion X can be a small local region, it is preferable that the minimum value Tmin of the carcass cord distance T is kept in a continuous region, so as to form a parallel region G1 where the carcass body 6a and the folded portion extend substantially parallel to each other, as shown. Such a parallel region G1 can effectively distribute the heat generation, which is caused by shear distortion applied to this region. As a result, suppresses the rubber splitting or cracking phenomenon, which can take place near to the outer end 8e of the bead apex gum 8. By the way, the folded portion 6b and the carcass body 6a, in this example, extend respectively in a straight line in this parallel region G1.
In this example, a distance gradually increasing zone G2 is provided in the adjacent region G. In zone G2 the distance gradually increases and zone G2 is formed continuously with the parallel region G1 and is disposed radially outwards of the minimum adjacent portion X. In the distance gradually increasing zone G2, the carcass cords distance (T) defined hereinbefore gradually increases towards the outer end 6e of the folded portion 6b. Due to the distance gradually increasing zone G2, the thickness of the rubber between the plies is increased at the position of the outer end 6e of the folded portion 6b, correspondingly to the minimum adjacent portion X. Therefore, it is possible to suppress the rubber splitting phenomenon in long term us of the tyre, which could occur at a region near to the outer end 6e. Namely, it is possible to suppress the splitting, which can induce tyre separation phenomenon, in the region near to the outer end 6e of the folded portion 6b as well as in the region near to the outer end 8e of the bead apex 8.
The radial length (hb) of the distance gradually increasing zone G2 in this example is preferably 0.1 to 0.9 times the radial distance (h0 - ha) between the outer ends 6e and 8e, and the figures show the case of 0.2 times. The carcass cord distance Tmax at the outer end 6e is preferably 1.5 to 4.5 times the minimum value Tmin.
In said increasing zone G2, it is desirable to provide a cushion rubber 20 of the low modulus further than the topping rubber of the carcass 6 between the carcass body 6a and the folded portion 6b, in order to ensure the carcass cords distance (T). The 100% modulus of this cushion rubber 20 is 5 to 30 kgf/cm², and the thickness of the cushion rubber 20 is greater than the thickness of the topping rubber of the carcass 6. Such that the cushion rubber 20 absorbs the strain between the carcass body 6a and the folded portion 6b. As a result, when the cord looseness arose at the outer end 6e of the folded portion 6b, it can be suppressed that the cords looseness progresses for the separation of rubber.
The contour Y of the tyre outer surface of the tyre 1 in the region between the tyre cross section width maximum point P1 (hereinafter referred to as width maximum point P1) and the separating point P3 leaving from the flange F is formed so that a boss portion 10 projecting outwardly in the tyre axis direction with respect to a norm arc RO and a recessing portion 11 are formed in the standard state of the tyre. The recessing portion 11 is continuous with the boss portion 10 and extends in the radial direction so as to recess inwardly in the tyre axis direction with respect to the norm arc RO The norm arc RO is an arc, which has a centre on the line passing through the width maximum point P1 parallel to the tyre axis direction line WL. The norm arc RO passes the width maximum point P1 and tangentially contacts with the inner side of the flange F.
The boss portion 10 has, as shown in Fig. 4, an over radius starting point K1 and an under radius starting point K2 on the norm arc RO, and a maximum projecting point QA between the points K1 and K2. The maximum projecting point QA is disposed on a tyre radius direction line NL passing through the width maximum point P1, or in a region radially inside in the tyre axis direction compared to the tyre radius direction line NL.
The contour of the tyre is formed so that a straight boss upper side contour 10U is formed between the over radius starting point K1 and the maximum projecting point QA and a straight boss under side contour 10L is formed between the maximum projecting point QA and the under radius starting point K2, when the tyre is installed on a standard rim and the inner pressure of the tyre is 50kPa (inner pressure 50kPa). This example shows a preferable configuration where the boss upper side contour 10U is formed so as to be tangential to the norm arc RO. The over radius starting point K1 is disposed on the width maximum point P1 or near to this point P1.
The recessing portion 11 has an over radius ending point K3 and an under radius ending point K4 on the norm arc RO, and a maximum recessing point QB between the points K3 and K4. The contour of the tyre separates at most from the norm arc RO in the tyre axis direction at the maximum recessing point QB in the recessing portion. When the over radius ending point K3 is the same as the under radius starting point K2, a recess upper side contour 11U, which is a contour portion between the over radius ending point K3 and the maximum recessing point QB, is smoothly connected with the boss under side contour 10L. This example shows a preferable configuration in that the recess upper side contour 11U and the boss under side contour lOL are formed so as to be a straight line J which is substantially parallel to the folded portion 6b.
When the inner pressure is 50 kPa, the form of a tyre substantially corresponds to that in the vulcanisation process in a mould, thus the inner strain is small and the deformation is a minimum. Therefore, the tyre or the mould for fabricating the tyre of this example is formed so that the boss upper side contour 10U and the boss under side contour 10L are a straight line respectively and the recess upper side contour 11U and the boss under side contour 10L form a common straight line J.
A recess under side contour 11L of the recessing portion 11 disposed between the maximum recessing point QB and the under radius ending point K4 is smoothly connected with a swelling portion 12, which is disposed in a region outside of the norm arc RO in the tyre axis direction and is forming a convex arc connected with the separating point P3.
Because a recessing portion 11 is formed at the side of the separating point P3 to leave from the flange F in this manner, the tyre can deform in a large volume. Therefore, the shear deformation can be distributed in a large volume of the tyre and the heat generation can be reduced. Thus the bead durability of the tyre is improved due to the synergy of these effects.
The cross section of the boss portion 10 is substantially a triangle which has a maximum projecting point QA in the region where the height is near to the height of the outer end 6e of the folded portion 6b. Therefore, it is possible to secure a minimum necessary thickness (t) of rubber between the outer end 6e and the outer surface of the tyre, and simultaneously to suppress the increase of the rubber volume in the minimum level. Therefore, it is possible to suppress the crucial tyre damage which may start from the outer end 6e. Simultaneously, it is possible to effect lightening of the tyre due to the formation of the recessing portion 11 and to improve the tyre durability.
It is important to design the height (h1) of the maximum projecting point QA from the bead base line BL to be 0.85 to 1.15 times of the height (h0) of the folded portion 6e. When the height (h1) is out of the this range, the proper thickness (t) of rubber can not be provided, which will cause crucial tyre damage, for example, ply looseness leading to side wall destruction. Alternatively an inequality pattern corresponding to the outer end 6e will show on the outer surface of the tyre, which spoils the appearance of the tyre.
When the recess upper side contour 11U and the boss under side contour 10L are formed as a common straight line J parallel to the folded portion 6b, as shown in this example, the gum thickness (t) does not change, even when the height of the folded portion 6b uncontrollably changes according to the allowance in the production process. Thus such a structure is preferable. When the cross section of the boss portion 10 forms a triangle, the distribution of the rigidity changes smoothly and the stress due to the constant rolling under load is distributed in a large volume. Therefore, it is possible to suppress not only the damage which may start from the outer end 6e, but also damages which are caused by the forming of the boss portion 10 itself. Especially, when the boss upper side contour 10U is tangential to the norm arc RO, the rigidity changes more smoothly, thus it is preferable.
It is also important that the maximum boss distance (q1) from the norm arc RO to the maximum projecting point QA and the maximum recess distance (q2) from the norm arc RO to the maximum recessing point QB are respectively 0.001 to 0.040 times of the tyre cross section width (W).
If the maximum boss distance (q1) is smaller than 0.001 times the width (W), the thickness (t) of rubber is insufficient, therefore, rubber destruction due to the shear deformation at the outer end can take place, and crucial tyre damage, for example, ply looseness due to the splitting of the side wall, can take place. Also an inequality pattern corresponding to the outer end 6e may appear on the outer surface of the tyre, which will deteriorate the appearance of the tyre. On the other hand, when the maximum boss distance (q1) exceeds 0.04 times of the width (W), an unnecessary increase of weight results, and also the improvement of the durability according to the recessing portion will be hindered. Therefore, it is preferable that the maximum distance (q1) is 0.003 to 0.020 times the width (W).
Also if the maximum recess distance (q2) is smaller than 0.001 times the width (W), the improvement of the durability according to the lightening of the weight and the low heat generation can not be expected. On the other hand, when it exceeds 0.04 times the width (W), the rubber thickness from the carcass cord in the region of the folded portion 6b is too small. Therefore, rubber destruction due to stress deformation of the side wall rubber by the repeated rolling under load can take place, and a crucial tyre damage, for example, ply looseness due to the splitting of the side wall, can take place. Also an inequality pattern corresponding to the carcass cord can appear on the outer surface of the tyre, which will deteriorate the appearance of the tyre. Therefore, it is preferable that the maximum recess distance (q2) is 0.003 to 0.020 times the width (W).
It is also important that the height (h2) of the maximum recessing point QB from the bead base line BL is smaller than the height (h1), and simultaneously it is 0.30 to 0.90 times the height (h0). When the height is smaller than 0.3 times of height (h0), the tyre can not be compressed sufficiently by the flange F, and movement of the bead 4 during running of the tyre will be large, which will lead to an increase in the temperature of the bead 4, and as a result, the bead durability will be remarkably deteriorated. On the contrary, when the height exceeds 0.90 times the height (h0), the outer end 6e becomes too near to the maximum recessing point QB, and the stress concentrates to this maximum recessing point QB, and rubber destruction will take place. Therefore it is preferable that the height (h2) is 0.4 to 0.8 times the height (h0).
An especially preferable embodiment of the present invention is explained hereinbefore, however, persons skilled in this art will understand that the scope of the present invention is not limited by the disclosed and illustrated embodiment, but shall be understood according to the definition in the claims. And the present invention can be modified or changed in the scope of the invention. For example, the tyre according to the present invention can be applied to tyres in other categories, for example, tyres for van truck or small truck. Further, the present invention can be applied not only to a tyre with a tube, but also to a tyre without tube.

### Experimental data

Tyres for heavy load having the structure shown in Fig.1, the tyre size of which was 10.00R20, were made for study, and were tested. Their specification data are listed in Tables 1 and 2. The result of the study with respect to durability, visual appearance and rim chafing are listed in the Tables. The specifications of the carcass and the belt layer, etc, were identical and are listed in Table 3. The quantity GL in Tables 1 and 2 denotes the length of the adjacent region G, which is shown in Fig.1.

### (1) Durability:

Each tyre was run on a drum at a speed of 20 km, installed on a rim of 7.00 × 20, with an inner pressure of 800kPa and a load of 9000kg. The test was ended when a visible damage appeared. The running distance until stopping was compared by an index, which is the ratio of the running distance to that of the prior art tyre. The index for the prior art tyre is referred to be 100, and the higher index the tyre has, the better the tested tyre is.

### (2) Appearance:

The appearance of the tyre was visually observed to see whether inequalities due to the outer end of the carcass or due to the carcass cord appeared on the outer surface of the tyre. This was done under the condition that the inner pressure of the tyre was 800 kPa. The tyre appearance was estimated by an index, the index of the prior art tyre being 100, and the higher the index value, the better the appearance of the tested tyre.

### (3) Rim chafing:

The degree of rim chafing was visually observed, when the durability test was finished. The degree of chafing was estimated by an index, the index of the prior art tyre being set at 100, and the higher the index value is, the better the rim chafing.

**Table 1**

| | Comparison (#1) | Comparison (#2) | Comparison (#3) | Comparison (#4) | Comparison (#5) | Comparison (#6) | Comparison (#7) | Comparison (#8) |
|---|---|---|---|---|---|---|---|---|
| h0 | 82 | 113 | 94 | 94 | 94 | 94 | 94 | 94 |
| h1 | 95 | 95 | 95 | 95 | 95 | 95 | 95 | 95 |
| h1/h0 | 1.16 | 0.84 | 1.01 | 1.01 | 1.01 | 1.01 | 1.01 | 1.01 |
| q1 | 275 | 275 | 025 | 13.8 | 2.75 | 2.75 | 2.75 | 2.75 |
| q² | 19.3 | 19.3 | 19.3 | 19.3 | 025 | 13.8 | 13.8 | 13.8 |
| W | 275 | 275 | 275 | 275 | 275 | 275 | 275 | 275 |
| q1/W | 0.01 | 0.01 | 0.0009 | 0.05 | 0.01 | 0.01 | 0.01 | 0.01 |
| q2/W | 0.007 | 0.007 | 0.007 | 0.007 | 0.0009 | 0.05 | 0.05 | 0.05 |
| h2/h0 | 0.7 | 0.7 | 0.7 | 0.7 | 0.7 | 0.7 | 02 | 1.0 |
| t | 3.0 | 20 | 4.0 | 9.0 | 7.0 | 7.0 | 7.0 | 7.0 |
| GL | 43 | 68 | 50 | 50 | 50 | 50 | 50 | 50 |
| Tyre weight | 94 | 100 | 96 | 102 | 103 | 94 | 102 | 99 |
| Durability | 105 | 96 | 108 | 107 | 101 | 108 | 86 | 100 |
| AppearanceNote | 95 | 85 | 90 | 100 | 100 | 85 | 100 | 100 |
| Rim Chafing Note | 100 | 100 | 100 | 100 | 100 | 100 | 80 | 100 |

**Table 2**

| | Embediment (#l) | Embodiment (#2) | Embodiment (#3) | Embodiment (#4) | Embodiment (#5) | Embodiment (#6) | Embodiment (#7) | Priort Art Tyre |
|---|---|---|---|---|---|---|---|---|
| h0 | 94 | 94 | 94 | 94 | 94 | 94 | 94 | 94 |
| h1 | 95 | 95 | 95 | 95 | 95 | 95 | 95 | None |
| h1/h0 | 1.01 | 1.01 | 1.01 | 1.01 | 1.01 | 1.01 | 1.01 | - |
| q1 | 275 | 0.83 | 825 | 825 | 825 | 825 | 8.25 | - |
| q2 | 22 | 22 | 22 | 0.83 | 8.3 | 8.3 | 8.3 | - |
| W | 0.01 | 0.01 | 0.01 | 0.01 | 0.01 | 0.01 | 0.01 | - |
| q1/W | 0.01 | 0.001 | 0.04 | 0.04 | 0.04 | 0.04 | 0.04 | - |
| q2/W | 0.008 | 0.008 | 0.008 | 0.001 | 0.04 | 0.04 | 0.04 | - |
| h2/h0 | 0.7 | 0.7 | 0.7 | 0.7 | 0.7 | 0.3 | 0.9 | 0 |
| t | 7.0 | 5.0 | 5.0 | 5.0 | 5.0 | 5.0 | 5.0 | 0 |
| GL | 50 | 50 | 50 | 50 | 50 | 50 | 50 | 0 |
| Tyre weight | 95 | 94 | 97 | 98 | 99 | 94 | 97 | 100 |
| Durability | 120 | 120 | 120 | 120 | 120 | 120 | 120 | 100 |
| AppearanceNote | 103 | 98 | 102 | 102 | 102 | 102 | 102 | 100 |
| Rim Chafing Note | 104 | 104 | 104 | 104 | 104 | 98 | 104 | 100 |

**Table 3**

| Carcass: | |
|---|---|
| - Ply Number (sheet) | 1 |
| -Cord Constitution | Steel Cord (3 × 0.2 + 7 × 0.23) |
| -Cord Skew Angle (degree) | 90 |
| - Cord Density - Cord Density | 38 cords / 5 cm (measured at an under portion of the bead core) |

| Belt layer: | |
|---|---|
| - Ply Number (sheet) | 4 |
| -Cord Constitution | Steel Cord (3 × 0.2 + 6 × 0.35) |
| -Cord Skew Angle (degree) | (with respect to the inner ply) +50 / +18 / -18 / -18 |
| -Cord Density | 26 cords / 5cm |

From Tables 1 and 2, it can be seen that the durability of tyre was remarkably improved, and the lightening of tyre weight was attained in those tyres according to embodiments of the present invention. Simultaneously, the rim chafing was decreased and a high level tyre appearance was retained.
Because the tyre according to the present invention is constituted as explained hereinbefore, it is possible to surely secure a necessary rubber thickness at the carcass outer end, thus, it is possible to improve the durability and to lighten the tyre weight.

## Claims

1. A pneumatic tyre (1) comprising a carcass (6) having a carcass reinforcement ply (6a) extending from a tread portion (2) to a bead core (5) through a side wall portion (3), and a folded portion (6b) folded at the bead core (5), which is continuously formed with the carcass reinforcement ply (6a), wherein in a standard state that the tyre is installed on a normal rim and the inner pressure of the tyre is normal, the contour (Y) of the tyre outer surface in the meridian cross section between a tyre cross section maximum width point P1, which is the most outer point of the tyre surface in the tyre axis direction, and a flange separating point P3 to leave from a flange of the rim includes a projecting portion (10) projecting outside in the direction of the tyre axis direction with respect to a norm arc (Ro), which is an arc having its centre on a line passing through the tyre cross section width maximum point P1, the norm arc (Ro) passes through the point P1 and tangentially contacts with the flange (F), and a recessing portion (11) recessing in the tyre axis direction towards the inside with respect to the norm arc (Ro), the recessing portion extending towards the inner side in the radial direction;
the height (h1) of a maximum projecting point (QA) with respect to a bead base line (BL) is 0.85 to 1.15 times the height (h0) of the outer end (6e) of the folded portion (6b), where the maximum projecting point (QA) is a point on the projecting portion (10) and is separating at most from the norm arc (Ro) in the tyre axis direction;
the height (h2) of a maximum recessing point (QB) with respect to a bead base line (BL) is smaller than the height (h1),and is 0.30 to 0.90 times the height (h0), where the maximum recessing point (QB) is a point on the recessing portion (11) and is separating at most from the norm arc (Ro) in the tyre direction; and
the maximum boss distance (q1) from the norm arc (Ro) to the maximum projecting point (QA) and the maximum recess distance (q2) from the norm arc (Ro) to the maximum recessing point (QB) are respectively 0.001 to 0.040 times the tyre cross section width (W), **characterised in that** the projecting portion (10) has a substantially triangular shape, the recessing portion extends continuously with the projecting portion (10) and the tyre is formed so that the outer contour (Y) between the maximum projecting point (QA) and the maximum recessing point (QB) is a straight line having an inclination parallel to that of the folded portion (6b), in the state that the tyre is installed on a normal rim and the inner pressure of the tyre is 50 kPa.

2. A pneumatic tyre according to claim 1, **characterised in that** the maximum boss distance (q1) and the maximum recess distance (q2) are respectively 0.003 to 0.020 times the tyre cross section width (W).

3. A pneumatic tyre according to claims 1 or 2, **characterised in that** the height (h2) of the maximum recessing point is 0.4 to 0.8 times the height (h0).

4. A pneumatic tyre according to any of claims 1 to 3, **characterised in that** the tyre is formed so that the outer contour (Y) between the tyre cross section width maximum point (P1) and the maximum projecting point (QA) is a common straight line, in the state that the tyre is installed on a normal rim and the inner pressure of the tyre is 50 kPa.

5. A pneumatic tyre according to any of claims 1 to 4, **characterised in that** the contour (Y) of the tyre comprises an outer convex swelling portion (12), where the contour swells to the outside of the norm arc (Ro) in the tyre axial direction, the swelling portion (12) is disposed in a region radially inner side of the recessing portion and is connected with the separating point to leave from the rim.

## Patentansprüche

1. Luftreifen (1) mit einer Karkasse (6), die eine Karkassverstärkungslage (6a), die sich von einem Laufflächenabschnitt (2) zu einem Wulstkern (5) durch einen Seitenwandabschnitt (3) hindurch erstreckt, und einen umgeschlagenen Abschnitt (6b) aufweist, der an dem Wulstkern (5) umgeschlagen und kontinuierlich mit der Karkassverstärkungslage (6a) gebildet ist, wobei in einem Standardzustand, in dem der Reifen auf eine normale Felge aufgezogen und der Innendruck des Reifens normal ist, die Kontur (Y) der Außenfläche des Reifens im Meridianquerschnitt zwischen einem Punkt P1 der maximalen Querschnittsbreite des Reifens, der der am weitesten außen liegende Punkt der Reifenoberfläche in der Achsrichtung des Reifens ist, und einem Felgenhorntrennungspunkt P3, an dem er ein Felgenhorn der Felge verlässt, einen vorspringenden Abschnitt (10) umfasst, der in Achsrichtung des Reifens nach außen in Bezug auf einen Normbogen (Ro) vorspringt, der ein Bogen ist, dessen Mittelpunkt auf einer Linie liegt, die durch den Punkt P1 der maximalen Querschnittsbreite des Reifens verläuft, wobei der Normbogen (Ro) durch den Punkt P1 verläuft und das Felgenhorn (F) tangential berührt, und einen zurückspringenden Abschnitt (11) umfasst, der in Achsrichtung des Reifens nach innen in Bezug auf den Normbogen (Ro) zurückspringt, wobei sich der zurückspringende Abschnitt zu der Innenseite in der radialen Richtung erstreckt;
wobei die Höhe (h1) des maximal vorspringenden Punktes (QA) in Bezug auf die Wulstbasislinie (BL) das 0,85- bis 1,15-fache der Höhe (h0) des äußeren Endes (6e) des umgeschlagenen Abschnittes (6b) beträgt, wobei der maximal vorspringende Punkt (QA) ein Punkt auf dem vorspringenden Abschnitt (10) ist und am weitesten von dem Normbogen (Ro) in der Achsrichtung des Reifens beabstandet ist;
die Höhe (h2) des maximal zurückspringenden Punktes (QB) in Bezug auf die Wulstbasislinie (BL) kleiner ist als die Höhe (h1) und das 0,30- bis 0,90-fache der Höhe (h0) beträgt, wobei der maximal zurückspringende Punkt (QB) ein Punkt auf dem zurückspringenden Abschnitt (11) ist und am weitesten von dem Normbogen (Ro) in der Richtung des Reifens beabstandet ist; und
der maximale Vorsprungabstand (q1) von dem Normbogen (Ro) zu dem maximal vorspringenden Punkt (QA) und der maximale Rücksprungabstand (q2) von dem Normbogen (Ro) zu dem maximal zurückspringenden Punkt (QB) jeweils das 0,001- bis 0,040-fache der Querschnittsbreite (W) des Reifens betragen,
**dadurch gekennzeichnet, dass** der vorspringende Abschnitt (10) eine im Wesentlichen dreieckige Form aufweist, der zurückspringende Abschnitt sich kontinuierlich mit dem vorspringenden Abschnitt (10) erstreckt, und der Reifen derart gebildet ist, dass in dem Zustand, in dem der Reifen auf eine normale Felge aufgezogen ist und der Innendruck des Reifens 50 kPa beträgt, die äußere Kontur (Y) zwischen dem maximal vorspringenden Punkt (QA) und dem maximal zurückspringenden Punkt (QB) eine gerade Linie ist, die eine Schrägstellung aufweist, die parallel zu jener des umgeschlagenen Abschnittes (6b) liegt.

2. Luftreifen nach Anspruch 1, **dadurch gekennzeichnet, dass** der maximale Vorsprungabstand (q1) und der maximale Rücksprungabstand (q2) jeweils das 0,003- bis 0,020-fache der Querschnittsbreite (W) des Reifens betragen.

3. Luftreifen nach Anspruch 1 oder 2, **dadurch gekennzeichnet, dass** die Höhe (h2) des maximal zurückspringenden Punktes das 0,4- bis 0,8-fache der Höhe (h0) beträgt.

4. Luftreifen nach einem der Ansprüche 1 bis 3, **dadurch gekennzeichnet, dass** der Reifen derart gebildet ist, dass in dem Zustand, in dem der Reifen auf eine normale Felge aufgezogen ist und der Innendruck des Reifens 50 kPa beträgt, die äußere Kontur (Y) zwischen dem Punkt P1 der maximalen Querschnittsbreite des Reifens und dem maximal vorspringenden Punkt (QA) eine gemeinsame gerade Linie ist.

5. Luftreifen nach einem der Ansprüche 1 bis 4, **dadurch gekennzeichnet, dass** die Kontur (Y) des Reifens einen äußeren konvex anschwellenden Abschnitt (12) umfasst, wobei die Kontur zur Außenseite des Normbogens (Ro) in der axialen Richtung des Reifens anschwillt, der anschwellende Abschnitt (12) in einem Bereich radial innenseitig von dem zurückspringenden Abschnitt angeordnet ist und mit dem Trennungspunkt, an dem er die Felge verlässt, verbunden ist.

## Revendications

1. Pneumatique (1) comprenant une carcasse (6) ayant une couche de renforcement de carcasse (6a) s'étendant depuis une portion formant bande de roulement (2) jusqu'à une tringle de talon (5) à travers une portion de paroi latérale (3), et une portion repliée (6b) repliée au niveau de la tringle de talon (5) et qui est formée en continu avec la couche de renforcement de carcasse (6a), dans lequel, dans un état standard où le pneumatique est installé sur une jante normale et où la pression intérieure du pneumatique et normale, le contour (Y) de la surface extérieure du pneumatique dans une section transversale méridienne entre un point P1 à la largeur maximum de la section transversale du pneumatique, qui est le point le plus extérieur de la surface du pneumatique dans la direction axiale du pneumatique, et un point de séparation de flasque P3 à la séparation depuis un flasque de la jante, inclut une portion en projection (10) qui se projette vers l'extérieur dans la direction de l'axe du pneumatique par rapport à un arc normalisé (Ro), qui est un arc dont le centre est sur une ligne passant à travers le point P1 à la largeur maximum de la section transversale du thématique, ledit arc normalisé (Ro) passant par le point P1 et venant tangentiellemennt en contact avec le flasque (F), et une portion en évidement (11) en évidement dans la direction axiale du pneumatique vers l'intérieur par rapport à l'arc normalisé (Ro), la portion en évidement s'étendant vers le côté intérieur dans la direction radiale ;
la hauteur (h1) d'un point en projection maximum (QA) par rapport à une ligne de base (BL) du talon est de 0,85 à 1,15 fois la hauteur (h0) de l'extrémité extérieure (6e) de la portion repliée (6b), où le point en projection maximum (QA) est un point sur la portion en projection (10) et est séparé au maximum depuis l'arc normalisé (Ro) dans la direction axiale du pneumatique ;
la hauteur (h2) d'un point en évidement maximum (QB) par rapport à une ligne de base (BL) du talon est plus petite que la hauteur (h1) et est de 0,30 à 0,90 fois la hauteur (h0), où le point en évidement maximum (QB) est un point sur la portion en évidement (11) et est séparé au maximum de l'arc normalisé (Ro) dans la direction du pneumatique ; et la distance de dépassement maximum (q1) de l'arc normalisé (Ro) au point de projection maximum (QA) et la distance en évidement maximum (q2) de l'arc normalisé (Ro) au point en évidement maximum (QB) sont respectivement de 0,001 à 0,040 fois la largeur de la section transversale (W) du pneumatique,
**caractérisé en ce que** la portion en projection (10) a une forme sensiblement triangulaire, la portion en évidement s'étend en continu avec la portion en projection (10) et le pneumatique est formé de manière que le contour extérieur (Y) entre le point en projection maximum (QA) et le point en évidement maximum (QB) est une ligne droite ayant une inclinaison parallèle à celle de la portion repliée (6b), dans l'état où le pneumatique est installé sur une jante normale et où la pression intérieure du pneumatique est 50 kPa.

2. Pneumatique selon la revendication 1, **caractérisé en ce que** la distance de dépassement maximum (q1) et la distance en évidement maximum (q2) sont respectivement de 0,003 à 0,020 fois la largeur de la section transversale (W) du pneumatique.

3. Pneumatique selon les revendications 1 ou 2, **caractérisé en ce que** la hauteur (h2) du point en évidement maximum est de 0,4 à 0,8 fois la hauteur (h0).

4. Pneumatique selon l'une quelconque des revendications 1 à 3, **caractérisé en ce que** le pneumatique est formé de manière que le contour extérieur (Y) entre le point de largeur maximum (P1) de la section transversale du pneumatique et le point en projection maximum (QA) est une ligne droite commune, dans l'état où le pneumatique est installé sur une jante normale et où la pression intérieure du pneumatique est 50 kPa.

5. Pneumatique selon l'une quelconque des revendications 1 à 4, **caractérisé en ce que** le contour (Y) du pneumatique comprend une portion bombée convexe extérieure (12), dans laquelle le contour est bombé vers l'extérieur de l'arc normalisé (Ro) dans la direction axiale du pneumatique, ladite portion bombée (12) étant disposée dans une région du côté radialement intérieur de la portion en évidement, et est connecté au point de séparation pour quitter la jante.
